# EUROPEAN PATENT SPECIFICATION

(11) **EP 3 459 785 B1**
(45) Date of publication and mention of the grant of the patent: **03.11.2021**
(21) Application number: 18194309.3
(22) Date of filing: 13.09.2018
(51) Int. Cl.: B60L 53/00, B60L 53/31, B60L 53/30

(54) **ELECTRIC VEHICLE CHARGING APPARATUS**
ELEKTROFAHRZEUGLADEVORRICHTUNG
APPAREIL DE CHARGE DE VÉHICULE ÉLECTRIQUE

(30) Priority: 26.09.2017 GB 201715529
(43) Date of publication of application: 27.03.2019
(73) Proprietor: Lowes, Adrian, Bradford, Yorkshire BD13 3JS (GB)
(72) Inventor: Lowes, Adrian, Bradford, Yorkshire BD13 3JS (GB)
(74) Representative: HGF

(56) References cited:
- WO-A1-94/16489
- CN-U- 205 509 450
- DE-A1-102009 024 721
- DE-U1-202017 100 174
- JP-A- 2015 053 811
- US-A1- 2011 074 351
- US-A1- 2013 221 177
- US-A1- 2013 257 373
- US-A1- 2013 338 820

## Description

This invention relates to an electric vehicle charging apparatus. In particular embodiments the invention relates to an apparatus for facilitating electric vehicle charging by providing a charging connector coupled to a boom arm extending transverse to a column, such that the charging connector can be readily positioned for electrically connecting to a charging port of an electric vehicle.

### BACKGROUND

Electric and hybrid-electric vehicles are an alternative mode of transport to petrol and diesel engine vehicles. These vehicles use an electric motor as a main or an auxiliary driving mechanism, and incorporate a rechargeable battery to power the electric motor. Recent advancements in electric vehicle technology have led to electric vehicles with increased range and speed, which has contributed to an increase in the popularity of electric vehicle ownership. As an increased number of vehicle manufacturers begin to produce electric vehicles, electric vehicle ownership appears set to become commonplace.

Electric vehicles are generally recharged by connecting the electric vehicle to a specialised charging apparatus (which may be referred to as a charging station or a charging point), which includes a charging connector which couples with a charging port on the vehicle and delivers power to recharge the vehicle's battery. The charging stations generally draw electricity from the main power grid, and are therefore provided in locations electrically connected to the main power grid. For example, electric vehicle charging stations may be provided at service stations, shopping or leisure venues, or may be provided at the user's home. Electric vehicle recharging is currently much slower than refilling a petrol or diesel vehicle with fuel, and may require a user to recharge their electric vehicle for a long time, for example overnight.

A common problem associated with the usage of electric vehicles is difficulty in accessing facilities to recharge the electric vehicle. For example, traditional at home charging systems are generally installed in a garage at the user's home. A user that does not own a garage, or owns multiple electric vehicles, may have difficulty in accessing or installing an electric vehicle charging system in their home.

Another problem associated with recharging electric vehicles is related to the cables that connect the charging connector to an electricity source. These cables may present obstructions if they are run from a charging station to an electric vehicle across an access way, such as a pavement, in that they may present a trip hazard to people, or may be at risk of damage if they are walked on by people or collide with other objects. For example, a user that does not own a garage or a driveway may have to park their electric vehicle on the street outside their home, and connect their electric vehicle to a charging apparatus at their home by laying the charging cable across a pavement.

Also, for any charging apparatus it may be desirable to provide flexibility over the location of the charging connector to accommodate different sizes and shapes of vehicles and vehicles parked in different orientations.

### BRIEF SUMMARY OF THE DISCLOSURE

It is an aim of certain embodiments of the invention to solve, mitigate or obviate, at least partly, at least one of the problems and/or disadvantages associated with the prior art. Certain embodiments aim to provide at least one of the advantages described below.

According to the invention, an electric vehicle charging apparatus is provided. The electric vehicle charging apparatus comprising a column; a boom arm coupled to the column; a charging connector configured to electrically couple to an electric vehicle; and an electrical cable configured to electrically connect the charging connector to a power supply via the boom arm and the column; wherein, in a stowed state, the boom arm is received within the column; wherein, in a deployed state, the boom arm extends transverse to the column and the charging connector extends from part of the boom arm distal to the column; wherein the boom arm is configured to travel along the column and then rotate relative to the column in order to move from the stowed state to the deployed state; wherein in the deployed state the charging connector is suspended from the boom arm by the electrical cable; and wherein tension applied to the charging connector draws further electrical cable from the boom arm.

According to the invention, in the stowed state, the electrical cable is be retracted into the boom arm.

In a further example embodiment, in the stowed state, the charging connector may be received within the column.

In a further example embodiment, in the stowed state, the column may be enclosed with the boom arm inside the column; and the column may comprise an opening through which the boom arm passes when moving between the stowed state and the deployed state.

In a further example embodiment, the column may further comprise a roller to guide rotation of the boom arm when deploying or stowing the boom arm, and to support the boom arm in the deployed state.

In a further example embodiment, the electric vehicle charging apparatus may further comprise a carriage within the column and pivotably coupled to the boom arm, the carriage being configured to be driven along the column such that movement of the carriage deploys or stows the boom arm.

In a further example embodiment, the electric vehicle charging apparatus may further comprise a drive mechanism configured to drive the carriage along the column to deploy or stow the boom arm.

In a further example embodiment, in the deployed state, the boom arm may extend transverse to the column from a section of the column distal to the ground plane.

In a further example embodiment, the boom arm may incorporate a hinge permitting the boom arm to rotate about the column.

In a further example embodiment, the boom arm may be arranged to telescope to move the charging connector towards or away from the column in the deployed state.

Advantageously, certain embodiments of the present invention provide an electric vehicle charging apparatus for the charging of an electric vehicle which prevents cables or wires trailing across the ground, which may pose potential hazards to people and vehicles passing. There may also be associated risk of damage to parts of any system that trail across the ground due to collisions with people and vehicles, which is avoided by certain embodiments of the present invention.

Advantageously, certain embodiments of the present invention provide an electric vehicle charging apparatus which may be moved between a deployed state, wherein the ground is kept clear from obstacles and an electric vehicle may be charged, and a stowed state, in which the electric vehicle charging apparatus is stowed in a convenient position.

Advantageously, certain embodiments of the present invention provide an electric vehicle charging apparatus which may be enclosed in the stowed state to reduce the size of the electric vehicle charging apparatus and also protect elements of the apparatus from weather or vandalism.

Advantageously, certain embodiments of the present invention provide an electric vehicle charging apparatus which comprises a charging connector which may be extended to a position convenient for the charging of an electric vehicle.

Advantageously, certain embodiments of the present invention provide an electric vehicle charging apparatus wherein a position of a boom arm of the electric vehicle charging apparatus may be adjusted to a position more convenient to a user attempting to charge an electric vehicle.

### BRIEF DESCRIPTION OF THE DRAWINGS

Embodiments of the invention are further described hereinafter with reference to the accompanying drawings, in which:
Figures 1 to 5 show an electric vehicle charging apparatus according to an embodiment of the present invention moving from a deployed state in Figure 1 to a stowed state in Figure 5;
Figure 6 is an isometric view of the electric vehicle charging apparatus of figures 1 to 5, in the deployed state;
Figure 7 illustrates the electric vehicle charging apparatus of figures 1 to 5 in cross-section when the electric vehicle charging apparatus is in the deployed state, along the line A:A in figure 6 in the direction of the arrows;
Figure 8 illustrates the electric vehicle charging apparatus of figures 1 to 5 in cross-section through a column along the line B:B in figure 6 in the direction of the arrows;
Figure 9 is an exploded view of part of the electric vehicle charging apparatus of figures 1 to 5, showing a boom arm, charging connector and a part of a boom arm drive mechanism normally located within the column;
Figures 10 and 11 illustrate the electric vehicle charging apparatus of figures 1 to 5 when the electric vehicle charging apparatus is in the deployed state with the boom arm rotated 45 degrees about the column, figure 10 in plan view and figure 11 in isometric view;
Figure 12 is a side view of an electric vehicle charging apparatus according to another embodiment of the present invention;
Figure 13 is a plan view of the electric vehicle charging apparatus of figure 12;
Figure 14 illustrates in a plan view the electric vehicle charging apparatus of figures 12 and 13 when the electric vehicle charging apparatus is in the deployed state with a boom arm together with a column rotated relative to mounts for the electric vehicle charging apparatus; and
Figure 15 is an isometric view of the electric vehicle charging apparatus of figures 12 to 14.

### DETAILED DESCRIPTION

An electric vehicle charging apparatus according to certain embodiments of the present invention is designed to provide a cable management and deployment system for the charging of electric vehicles. The electric vehicle charging apparatus is moveable between a stowed state and a deployed state.

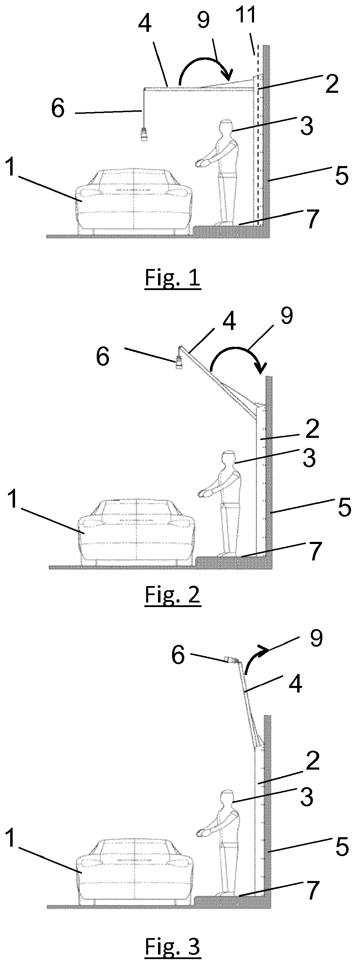

Figure 1 shows an example embodiment of the electric vehicle charging apparatus in the deployed state. The electric vehicle charging apparatus consists of a column 2, boom arm 4 and a charging connector 6. In the deployed state, the charging connector 6 extends from the end of the boom arm 4 distal to the column 2. The column 2 is fixed to a wall of a building 5. It will be appreciated that for rigidity components of the electric vehicle charging apparatus may be formed from a metal, such as steel. In particular, in certain embodiments at least the column 2 and the boom arm 4 are metal.

In Figure 1, the electric vehicle charging apparatus is in a deployed state. The boom arm 4 is extended transversely from the column 2, and the charging connector 6 extends from the end of the boom arm 4 distal to the column 2. The boom arm 4 and column 2 are arranged such that the boom arm 4 extends at a height above that of an average height person 3, in order to leave a clear space on the ground 7. Alternatively, the boom arm 4 may extend from any point on the column 2 that is sufficiently high to allow the person 3 to pass underneath the boom arm 4. This provides the advantage of allowing a user to charge an electric vehicle 1 in situations where the ground 7 is obstructed, or where it is desired to leave the ground 7 clear of cables. This allows people to pass underneath the boom arm 4 without difficulty or risk of injury. It will be appreciated that the actual height at which the boom arm extends from the column may vary between embodiments according to the requirements of a particular implementation.

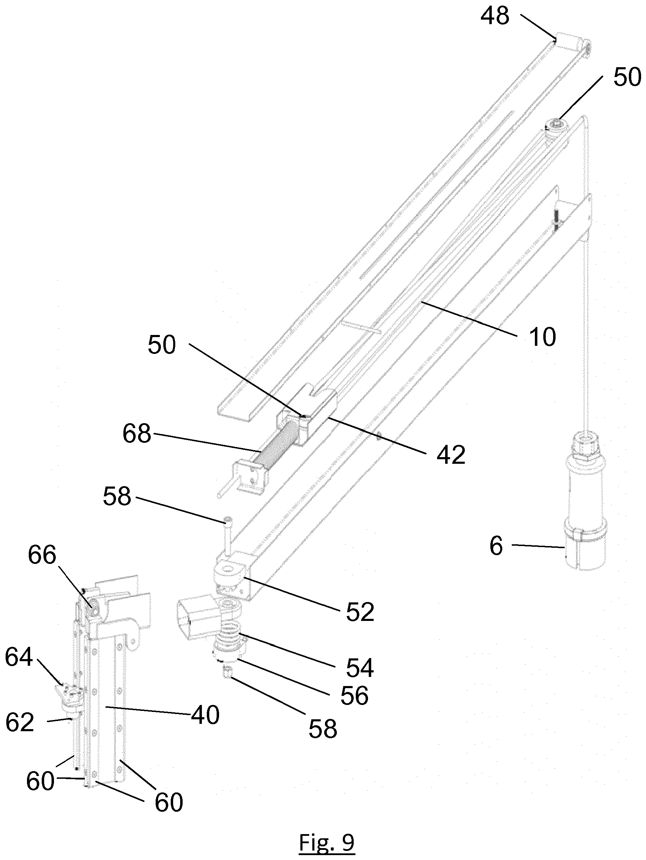

The column 2 is formed such that it may receive the boom arm 4. The column 2 may have a longitudinal axis, illustrated by the dotted line 11, which extends transversely to a ground plane, for instance perpendicular to the ground plane. The column 2 may be fixed to a building 5 as illustrated such that the longitudinal axis of the column 2 extends generally parallel to the building 5. The boom arm 4 may extend transversely to the longitudinal axis 11 of the column 2. The boom arm 4 may also rotate around the longitudinal axis 11 of the column 2 in the plane of extension of the boom arm 4, such that the distance from the end of the boom arm 4 distal to the column 2 to the column 2 is kept constant. This is discussed below in detail in relation to figures 9 to 11.

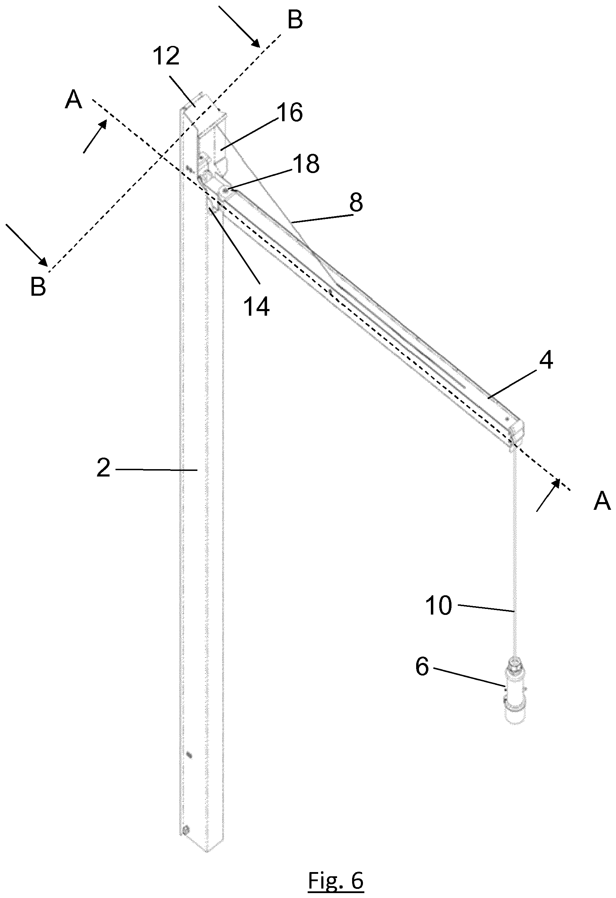

In the deployed state, the charging connector 6 may be connected to a charging port of electric vehicle 1 to enable charging of the electric vehicle 1. Figure 1 is shown with the charging apparatus in the deployed state but the charging connector 6 not yet coupled to the electric vehicle 1. The user (for example, person 3) may move the charging connector 6 to the charging port of the electric vehicle 1 by applying tension to the charging connector 6, which causes the charging connector 6, or more precisely an electric cable coupled to the charging connector, to extend further from the boom arm 4. This is discussed below with reference to figure 6.

The apparatus may comprise a power supply to provide power to the charging connector 6 through an electrical cable which passes through the column 2 and boom arm 4. The power supply may be a connection to a main electricity grid or may be an independent power storage device, or the electric vehicle charging apparatus may be operable on either. The connection to the power supply may be provided inside the column 2, for example at a level proximal to the ground 7 or at any other suitable connection point. A connection to a main electricity grid may provide more reliable power supply, but connection to an independent power storage device may allow utilisation of energy stored by a user through a home energy system, such as solar panels. This would also enable the electric vehicle charging apparatus to be used in situations where there is no connection to a main electricity grid or the main electricity grid is down.

The example illustrated in Figure 1 shows the column 2 provided at the side of a building 5, but this is not an essential feature. The column 2 may be provided in any suitable location where sufficient stability can be achieved. For example, the column 2 may be provided on top of a base plate (not shown), or may couple directly to the ground, via any suitable fixing element such as bolts or screws, to achieve the same effect. A further option would be for the column 2 to be coupled to a separate free standing structure such as a pillar or bollard. The skilled person will be well aware of many suitable fixation techniques for attaching the column 2 to a building or a pillar, such as screws or bolts. This would enable the electric vehicle charging apparatus to be provided at a wider variety of locations, as the electric vehicle charging apparatus does not require a building 5 to be fixed to. For example, the electric vehicle charging apparatus could be provided in a car park.

The electric vehicle charging apparatus is moveable from the deployed state of figure 1 to a stowed state. The electric vehicle charging apparatus may be moved from one state to another by a number of user inputs. For example, the user inputting commands on a remote control, or a control unit on the electric vehicle charging apparatus. Alternatively, the electric vehicle charging apparatus may interface with another device to determine to move from one state to another when a predetermined condition is met, for example when the approach of a user's vehicle is detected. Movement between the deployed and stowed states may suitably be enabled by a drive mechanism, for instance powered by an electric motor, as is described below.

The movement from the deployed state to the stowed state begins with rotation of the boom arm 4 in direction 9, about a pivot close to or within the column 2, such that the end of the boom arm 4 distal to the column 2 moves toward a position above the column 2, and the boom arm 4 moves toward alignment with the longitudinal axis 11 of the column 2.

Figure 2 illustrates the apparatus part way between the deployed state and the stowed state, after the boom arm 4 has moved in direction 9 from figure 1, and shows the boom arm 4 extending at a position from the column 2 between the transverse extension in the deployed state of Figure 1 and the orientation of the column 2. Figure 3 illustrates the electric vehicle charging apparatus where the boom arm 4 has rotated further in direction 9.

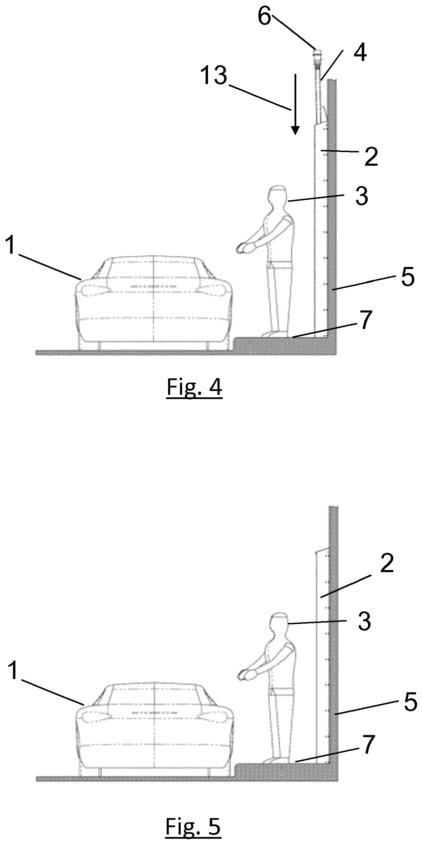

In figure 4, the boom arm 4 has rotated in direction 9 until it is in alignment with the column 2. The boom arm 4 bears against the face of the column 2 fixed to the wall 5 and rotation past this point is prevented. The boom arm 4 then moves in direction 13 along the column 2 and enters the column 2 through a top opening in the column 2. Alternatively, the column 2 may be open on one side and the boom arm 4 may begin to enter the column 2 during the rotation. In this case, the boom arm 4 may be adapted such that the electric vehicle charging apparatus is enclosed and charging connector 6 is received inside the column 2.

Figure 5 shows the apparatus in the stowed state, after the boom arm has completed moving in direction 13 and reached a resting position in the column 2. For example, the resting position may be reached when the boom arm 4 is prevented from moving further along the column 2 by an obstructing element, when the boom arm 4 has reached the end of the column 2, or when a sensor determines that the movement is completed and the drive mechanism is disabled.

In the stowed state, the boom arm 4 and charging connector 6 are received within the column 2. In the stowed state, the column 2 may fully enclose the boom arm 4 and the charging connector 6, or may be open on one or more faces of the column 2. In this case, the boom arm 4 or the charging connector 6 may further comprise a part, such as a lid, to enclose the apparatus when the boom arm 4 or charging connector 6 are received within the column 2. It may be advantageous to enclose the boom arm 4 and charging connector 6 within the column 2 in order to protect the apparatus from sustaining damage from weather.

The boom arm 4 may be received by the column 2 at the same time as the rotation of the boom arm 4 occurs, to a level allowed by the alignment of the boom arm 4 with the column 2, or the boom arm 4 may complete rotation to align with the column 2 before the column 2 receives the boom arm 4.

At the same time as the boom arm 4 rotates in direction 9 toward alignment with the column 2, the charging connector 6 may move toward the end of the boom arm 4. This will be discussed later with reference to figure 6.

Alternatively, the apparatus may be configured with sensors to ensure that the charging cable is at a predetermined stage of retraction before the boom arm 4 is allowed to move toward the stowed state. In another example, sensors may be equipped to prevent the apparatus moving toward the stowed state if the charging connector 6 is connected to a vehicle.

Figure 6 is an isometric view of the electric vehicle charging apparatus in the deployed state.

It can be seen in figure 6 that the charging apparatus further comprises a lid 12 which acts to cover the inside of the column 2, and an electrical cable 10 from which the charging connector 6 dangles. The electrical cable 10 provides power from the power supply to the charging connector 6, and is also employed to extend the charging connector 6 from the boom arm 4 to a position at which the charging connector 6 can be connected to an electric vehicle 1. Internal to the structure of the charging apparatus, and hence not visible in figure 6, the electrical cable couples back to an electrical power supply. The lid 12 may be moved by the action of a cable management wire rope 8, which is connected to components inside the column 2 at one end and to the electrical cable 10 at the other end (as will be further described in the subsequent cross section views of the charging apparatus). The cable management wire rope may connect to the electrical cable 10 inside the boom arm 4, and may pass through an opening in one face of the boom arm 4 to access the inside of the boom arm 4 (at the point illustrated in figure 6 where the wire rope 8 intersects the top of the boom arm 4).

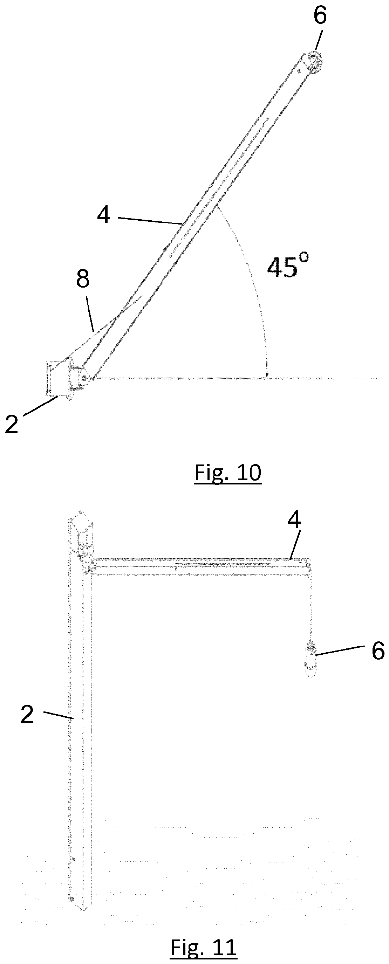

Column 2 also comprises a pivot assembly 18 and guide flare plates 16 which together allow the boom arm 4 to rotate about the longitudinal axis of the column 2, in the plane of the boom arm 4 in the deployed state. This rotation is described below with reference to figures 10 and 11.

In the view of figure 6, the column 2 is enclosed apart from an opening provided at an upper part of the column 2. The boom arm 4 extends from this opening. Alternatively, the column 2 may be open on one or more faces. The extension of the boom arm 4 from only a constrained opening in the column 2 provides the advantage of protecting the internal components of the column 2, for instance from weather damage.

Figure 6 also shows a front roller 14 which acts to support the boom arm 4 when in the deployed state, and also facilitates smooth rotation of the boom arm 4 during deployment and stowing processes.

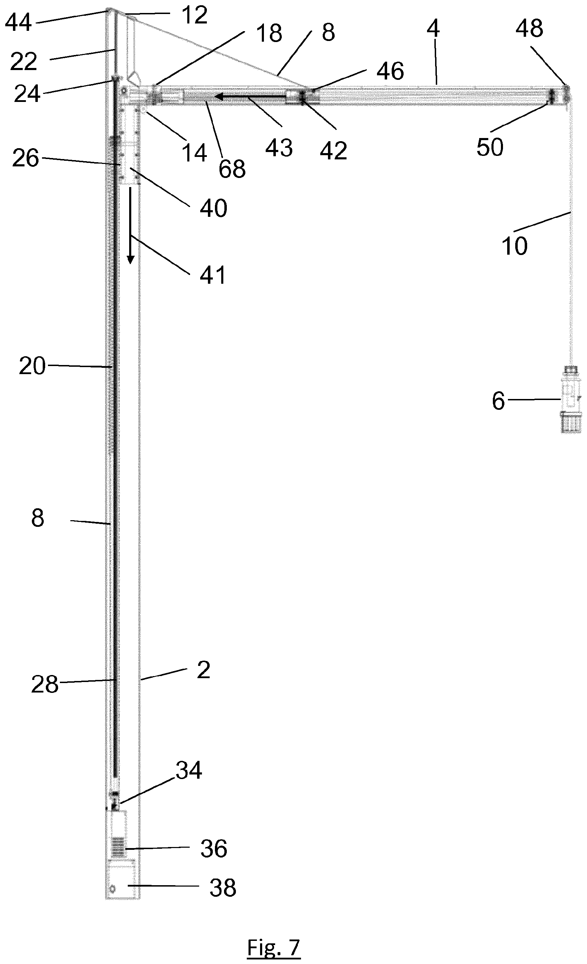

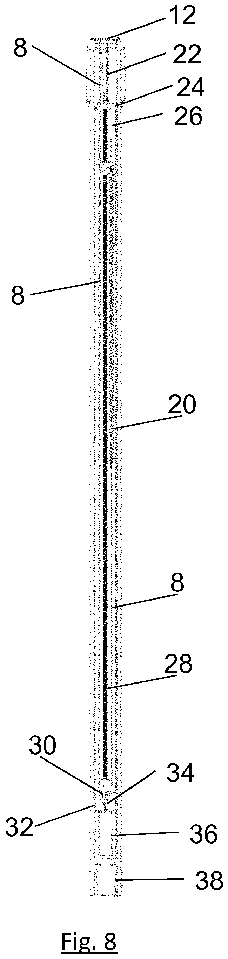

The boom arm 4 may be formed to have a fixed length, or may be formed to be telescopic such that it may extend and contract to change its length. This may be achieved by any means known to those skilled in the art. For example, the boom arm 4 may comprise multiple sections with a progression of widths or diameters, each section connected to the neighbouring section via slides or rollers, such that in a contracted state, each section may be stored within a neighbouring section. In the extended state, the sections may move along the connecting slides or rollers to extend outward from the neighbouring section. This configuration would enable adjustment of the length of the boom arm 4. This may be useful in situations where the charging connector 6 needs to be deployed at a greater distance from the column 2. Additionally, a telescopic boom arm 4 may provide the benefit of requiring a smaller space in which to be received by the column 2 in the stowed state. This may allow for reductions in the size of the column 2. If the boom arm 4 is deployed in a contracted state and then extended, this would additionally provide the benefit of reducing the space required surrounding the column 2. The boom arm 4 may telescope under the manual action of the user, for instance by pulling the free end of the boom arm 4 or the charging connector 6. Alternatively, telescopic may be driven by a suitable drive mechanism (not illustrated) which may be similar to the drive mechanism causing the deployment of the boom arm 4, described below in connection with figures 7 and 8.

Figures 7 and 8 illustrate cross-sectional views, taken along line A:A of figure 6 in the direction of the arrows and along line B:B of figure 6 in direction of the arrows, respectively, of the electric vehicle charging apparatus in the deployed state. The boom arm 4 extends transversely from the column 2, supported by front roller 14.

The boom arm 4 rests against the front roller 14 during deployment and storage. The front roller 14 also supports the boom arm 4, such that the boom arm 4 does not sag beyond 90 degrees of rotation from vertical (it will be appreciated that the precise angle at which the boom arm 4 extends from the column 2 may vary). Alternatively, or additionally, the boom arm 4 may be supported by supporting wires or cables extending from the column 2.

The boom arm 4 is pivotably connected to a boom arm carriage 40 which is provided inside the column 2. The boom arm carriage 40 is configured to move along the inside of the column 2 in the direction of arrow 41 when the charging apparatus moves from the illustrated deployed state to a stowed state. From the deployed state, when the boom arm carriage 40 begins to move in direction 41, the boom arm 4 bears against front roller 14 which causes the boom arm 4 to rotate upwards on the pivot connection with the boom arm carriage 40. When moving from the stowed state to the deployed state the weight of the boom arm 4 causes outwards rotation of the boom arm 4 to the deployed state as the boom arm carriage 40 approaches the front roller 14.

The boom arm 4 rotates toward alignment with the boom arm carriage 40 and column 2 as the boom arm carriage 40 continues to move downwards along the column 2 in the direction of the arrow 41. The column 2 receives the boom arm 4 once the boom arm 4 is sufficiently aligned with the open space in the column 2 left by the movement of the boom arm carriage 40. The boom arm carriage 40 moves along the column 2 until it reaches a terminal position, at which point the boom arm 4 is received within the column.

The boom arm carriage 40 is driven by connection with a screw 28. The screw 28 rotates and drives a nut, the nut being fixedly coupled to the boom arm carriage 40 (as illustrated in figure 9). The rotation of the screw 28 drives the nut along the axis of screw 28 as the boom arm carriage 40 and the attached nut are prevented from rotation within the column 2, which in turn drives the boom arm carriage 40 along direction 41 or in the reverse direction according to the direction in which screw 28 is rotated. For example, the column 2 may comprise straight channels which prevent the nut from rotating in accordance with the rotation of the screw 28, and instead cause the nut to move along the screw 28. The boom arm carriage 40 is retained by the outer casing of the column 2 and frame inner plate 26.

In alternative example embodiments, the screw 28 and nut may be replaced by a belt drive, pneumatic or hydraulic actuator, or any other suitable alternative known to the skilled person, which would cause the boom arm carriage 40 to move along the column 2.

An electric motor 36 and electrical control housing 38 control the movement of the screw 28 via shaft coupling 34. The method of drive could also be pneumatic or hydraulic.

In certain example embodiments, the charging connector 6 may extend and retract on an electrical cable 10 from the end of the boom arm 4 distal to the column 2. The charging connector 6 may be extended further from the end of the boom arm 4 when tension is applied, for example by a user pulling the charging connector 6 away from the boom arm 4. This may enable the user to move the charging connector 6 to a position where it may connect with their electric vehicle and initiate charging.

Alternatively, extension and retraction of the charging connector 6 may be controlled by remote control or controls provided on the apparatus, and facilitated by any suitable driving mechanism, for example an electric motor.

In certain example embodiments, the electric vehicle charging apparatus may further comprise means to retract the charging connector 6 on the electrical cable 10 toward the boom arm 4 during the movement to the stowed state, and extend the electrical cable 10 from the boom arm 4 during movement to the deployed state. This can be seen in Figures 1 to 4, where the charging connector 6 approaches the boom arm 4 during the movement of the apparatus from the deployed state to the stowed state. The retraction of the charging connector 6 and the electrical cable 10 may occur as a result of the movement of the boom arm 4, due to internal components transferring the movement of the boom arm 4 to movement of the electrical cable 10 and charging connector 6, or may be driven separately.

Figures 7 and 8 together show how the electrical cable 10 may be extended or retracted from boom arm 4 during movement from the stowed state to deployed state or deployed state to stowed state respectively, governed by the position of a cable management control carriage 42.

The cable management control carriage 42 is connected to the boom arm carriage 40 via the cable management wire rope 8 such that movement of boom arm carriage 40 in direction 41 causes a movement in cable management control carriage 42 in direction 43 and vice versa.

Cable management control carriage 42 is connected to the electrical cable 10 at the side of the cable management control carriage 42 toward the charging connector 6. Movement in direction 43 by cable management control carriage 42 causes electrical cable 10 to be retracted towards and into the boom arm 4.

The cable management wire rope 8 is connected at a first end to the cable management control carriage 42 on the side of the cable management control carriage 42 that faces toward the charging connector 6. Cable management wire rope 8 passes over boom wire rope pulley 46 to outside of the boom arm 4, through an opening in the wall of the boom arm. Cable management wire rope 8 is then passes over lid wire rope roller 44 into the column 2.

Figure 8 shows the path of the cable management wire rope 8 inside the column 2. Cable management wire rope 8 passes down one side of the column 2, through wire rope pulley wheels 30 positioned past the end of the screw 28 proximal to the ground, and along part of the length of the column 2 on the other side of the screw 28. Cable management wire rope 8 is then coupled at a second end to cable management spring 20, which is coupled to the boom arm carriage 40. This coupling will be described further in relation to figure 9.

As the boom arm carriage 40 moves along the column 2 in direction 41 in the above described manner for stowing the boom arm 4, this action also moves cable management spring 20 downwards which in turn releases the tension on cable management wire rope 8. Cable management wire rope 8 moves upwards on the other side of the wire rope pulley wheels 30 to the boom arm carriage 40. This pulls the cable management wire rope 8 over boom wire rope pulley 44, and around boom wire rope pulley 46. The cable management control carriage 42 is tensioned by cable management return spring 68 which acts to pull cable management control carriage 42 along the boom arm 42 in direction 43 towards the column 2 when the cable management wire rope 8 is fed over boom wire rope pulley 46 into the boom arm 4, due to the presence of slack cable management wire rope 8 allowing the cable management return spring 68 to take in the slack. The movement of the cable management control carriage 42 pulls the electrical cable 10 over the nose rollers 48, retracting the charging connector 6 inside the boom arm 4 as the boom arm 4 is received within the column 2.

According to certain embodiments there may be an additional weight on the charging connector 6, to assist in electrical cable 10 deployment by overcoming the tension of cable management return spring 68 (with the resulting slack in the cable management wire rope 8 being taken in by spring 20).

Spring cable management spring 20, coupled between cable management wire rope 8 and boom arm carriage 40, acts to oppose retraction of the electrical cable 10 and is employed as a measure to weight or mitigate the effect of cable management return spring 68. It is to be understood that the invention could be put into use with only one spring.

Alternatively, the cable management control carriage 42 may be driven separately, for example by a second screw, nut and electric motor. In this case, separate control mechanisms may be included such that a user can control the extension of the electrical cable 10 separately to the deployment of the boom arm 4, or sensors may be employed to drive the cable management control carriage 42 when it is determined that the boom arm 4 is in a predetermined position.

In a different example, the electrical cable 10 may be extended by connecting the cable management wire rope 8 to rollers, such that movement of the cable management wire rope 8 causes rotation of the rollers, which subsequently drives the electrical cable 10 to extend out of the boom arm 4. For example, movement of the boom arm carriage 40 may feed additional cable management wire rope 8 into the boom arm 4, wherein the cable management wire rope 8 is wound around a roller engaged with a second roller around which electrical cable 10 is wound. Providing additional cable management wire rope 8 into the boom arm 4 to the first roller may cause rotation of the first roller and the second roller. When the second roller rotates, the electrical cable 10 may be driven to unwind from the second roller and extend out from the boom arm 4.

In the deployed stated, the electric vehicle charging apparatus is configured, in normal operating conditions, to deploy enough electrical cable 10 as to enable the operator to reach the charging connector 6. The operator has the ability (once the apparatus is in the deployed state) to pull additional electrical cable 10 out of the mechanism, resistance being given by springs 20 and 68.

The boom arm 4 may further comprise wire rope pully 50 arranged to provide a storage area for additional stowed electrical cable 10, as described in more detail below in connection with figure 9. This may act to amplify the movement of the cable management control carriage 42 described above such that a movement of the cable management control carriage 42 results in a deployment or retraction of a greater length of electrical cable 10 than the distance moved by the cable management control carriage 42.

Alternatively, the electrical cable 10 may be elasticated or coiled, such that the charging connector 6 may be moved to a different distance from the end of the boom arm 4 without drawing more electrical cable 10 from the boom arm 4.

In Figure 8, the column 2 can be seen to additionally comprise a lid spring 22, connected to the lid 12. In a different example, the column 2 may not comprise the lid 12 and lid spring 22 but may be open at one end. In this case, the boom arm 4 or the charging connector 6 may comprise an additional part, such as a plate shaped to fill the opening of the column, such that the boom arm 4 and charging connector 6 are enclosed within the column 2 in the stowed state.

The cable management wire rope 8 may also be employed to lift the lid 12 of the column 2 during the rotation of the boom arm 4. As the boom arm 4 rotates in accordance with the above described stowing process, the cable management wire rope 8 is tensioned by the action of the two springs, 20 and 68. As the boom arm 4 rotates, the tensioned cable management wire rope 8 acts to lift the lid 12 to allow the boom arm 4 to enter the column 2. Alternatively, the lid 12 may be lifted by direct contact with the boom arm 4 or charging connector 6, and may be weight to close when not in contact with these parts.

Figure 9 illustrates an exploded view of part of the electric vehicle charging apparatus, showing the structure of components within the boom arm 4 and the connection points between the boom arm 4 and the boom arm carriage 40. The electrical cable 10 passes through the boom arm 4 and extends out of the boom arm 4 on nose roller 48. Additional length of electrical cable may be stored in the boom arm 4 by cable pulley wheels 50, which are provided at the end of the boom arm 4 distal to the column 2 and on the cable management control carriage 42. Electrical cable 10 is passed from the column 2 into the boom arm 4 and then may be wound in loops between and around the cable pulley wheels 50 prior to passing out the end of the boom arm 4 and connecting to the charging connector 6, to allow additional electrical cable 10 to be stored in the boom arm 4. As cable management control carriage 42 moves toward the end of the boom arm 4 distal to the column 2, electrical cable 10 is passed outside the end of the boom arm 4.

The electrical cable 10 may extend from the boom arm 4 at a position on the boom arm 4 distal to the column 2. This may be the end of the boom arm 4, or a position along one side of the boom arm 4 where an opening is provided.

The extension of electrical cable 10 is controlled by the position of the cable management control carriage 42, which is moved by cable management wire rope 8, as described with reference to figures 7 and 8.

The cable management control carriage 42 may be attached to the cable management return spring 68 in the boom arm 4. The cable management return spring 68 may act to pull the cable management control carriage 42 toward the end of the boom arm 4 proximal to the column 2 to assist in retraction of the electrical cable 10 and charging connector 6 during movement from the deployed state to the stowed state, as discussed in relation to figures 7 and 8.

The boom arm carriage 40 is coupled to the spring cable management spring 20 via the spring mounting plate 64. The boom arm carriage 40 and spring cable management spring 20 may alternatively be coupled by any other suitable means known to those skilled in the art.

The rotating screw 28 of figures 7 and 8 drives the nut 62 along the column 2. The nut 62 is retained by the boom arm carriage 40. Straight channels may prevent the rotation of the nut 62 and cause it to move along the screw 28. The movement of the nut 62 in turn drives the boom arm carriage 40 along the column 2.

The boom arm carriage 40 uses bearing materials 60 around it to reduce friction whilst in operation. These bearing materials 60 could be replaced with slides or linear bearing sets.

The boom arm carriage 40 drives the boom arm 4 via carriage-boom pivot 66. The natural angle of the boom arm 4 in the stowed position assists the gravity deployment of the boom arm 4 around the pivot 66, over the front roller 14. An additional spring or actuator could be used to assist in deployment.

The boom arm 4 connects to the boom arm carriage 40 via the carriage-boom pivot 66. The carriage-boom pivot 66 enables the rotation of the boom arm 4 with respect to the column 2. The carriage-boom pivot 66 facilitates rotation of the boom arm 4 with respect to the boom arm carriage 40, such that the boom arm 4 may move between alignment with the boom arm carriage 40 and transverse extension from the end of the boom arm carriage 40.

The electric vehicle charging apparatus may also be configured to allow the boom arm 4 to be rotated about the longitudinal axis 11 of the column 2 in the plane of the boom arm in the deployed stated. This would provide the advantage of allowing the position of the boom arm 4, and thus the charging connector 6, to be adjusted relative to a position on the ground. This would be useful in situations where it is not possible to align the charging port of the electric vehicle 1 with the position of the boom arm 4, for example in a situation where parking is competitive and space is not available to park in the position directly underneath the boom arm 4. This would also accommodate different vehicles having different sizes and shapes. This rotation is facilitated by pivot assembly 18.

The pivot assembly 18 consists of two spring loaded dogs 52 and 56, each comprising teeth configured to mesh and lock together when the dogs are at particular positions relative to each other, such that the dogs are held together when at a position to allow the teeth to mesh. A spring 54, pushes these dogs together. When the boom arm 4 is rotated, by user operation or driven by an additional motor, the angle on the dog teeth allows the two dogs 52 and 56 to separate and rotate. Once an indexed position is reached the spring 54 reengages the dogs 52 and 56 to hold the system in position. This would provide the advantage of a more stable and secure electric vehicle charging apparatus, as the boom arm 4 would be prevented from moving due to unintended actions, such as wind blowing the boom arm 4 or accidental collisions with the electric vehicle charging apparatus. A stable boom arm 4 could prevent damage to electric vehicles 1, people 3 or buildings 5. This mechanism is illustrated in Figure 11.

Alternative mechanisms may be employed so that the position of the boom arm 4 is not limited to indexed positions, but may be freely rotated to any suitable position around the column 2. In this case, the apparatus may further comprise a latch or locking mechanism to lock the boom arm 4 in place once it has reached the desired position in order to prevent unwanted movement of the boom arm 4. For example, the boom arm 4 may freely rotate on a rotational member connecting it to the column 2 or boom arm carriage 40, but may be prevented from rotation when this is desired by an additional element which may be activated by a user to prevent rotation of the boom arm 4. This additional element could be for example a brake which grips the rotational element to prevent it from rotating, or an element that extends from the column 2 and acts as an obstacle to the movement of the boom arm 4 when activated, but is movable to a position out of the way of the boom arm 4 when rotation is desired.

The boom arm 4 may be rotated about the column 2 by a motor, or by force applied to the boom arm 4 directly by the user or by tension applied by the user to the charging connector 6. In the case where the boom arm 4 would be rotated by a user pulling on the charging connector 6, the boom arm 4 may only rotate when the electrical cable 10 is extended to its maximum length, or may be rotatable at any time if suitable force is applied, depending on the relative resistances to movement of the electrical cable 10 and the boom arm 4. Alternatively, rotation of the boom arm 4 around the column 2 may be enabled or prevented by the use of locking mechanisms and sensors.

Figures 10 and 11 illustrate the electric vehicle charging apparatus in a deployed state where the boom arm 4 is rotated by 45 degrees around the longitudinal axis of the column 2. Figure 10 is a plan view and figure 11 is an isometric view of the apparatus in the deployed state with the boom arm 4 at 45 degrees. The boom arm 4 may be configured to rotate beyond 45 degrees, however. For example, the boom arm may be allowed to rotate further by increasing the size of the opening of the column 2 where the boom arm 4 extends from the column 2. If the column 2 is desired to enclose the boom arm 4 and also allow rotation of the boom arm 4, additional plates could be provided on the boom arm 4 to close the opening when the boom arm 4 is stowed within the column 2, for example.

Stowing the electric vehicle charging apparatus is the reverse of deployment, with some minor differences. If the boom arm 4 is moved to an angle via the pivot assembly 18, for example as shown in Figures 10 and 11, when retracting the boom arm 4, guide flared plates 16 are used to straighten up the boom arm 4 for storage. The electric vehicle charging apparatus may further comprise an electrical or mechanical sensor which inhibits the storage cycle until the boom arm 4 is in the correct position. The boom arm 4 may alternatively be driven via the pivot assembly 18 to a desired position by an additional motor.

The human machine interface operating the apparatus could be via remote control or by direct input (push button(s) on the apparatus itself). There could also be a point of sale system installed for public use, this could include internet connection, control and motoring. Electric or mechanical sensors could be used to determine (but not limited to); limits of travel, correct boom alignment prior to storage and current consumption. Control could be of microprocessor type with auxiliary relays and contactors.

The electric vehicle charging apparatus may additionally comprise security or authentication components, for example a keypad for passcode access or a payment terminal to control deployment based on received payments. The electric vehicle charging apparatus may comprise communication modules to communicate with service operator servers, for use in identification, verification and payment in public situations.

The electric vehicle charging apparatus may be configured to interface with other devices, such as a user's smart phone, smart home system or vehicle, and move to a deployed state when it is determined that a user's vehicle approaches the electric vehicle charging apparatus, for example.

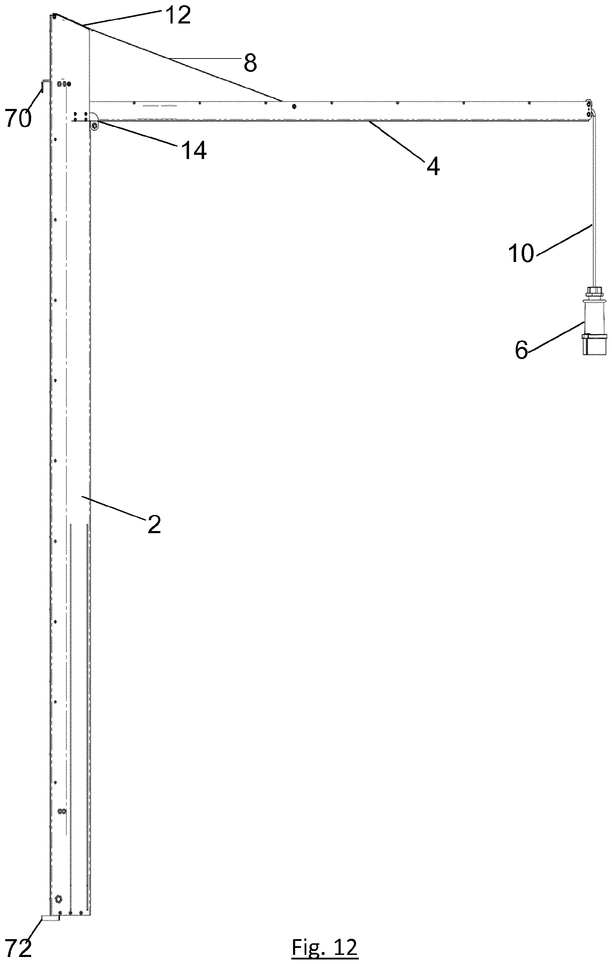

Figures 12 to 15 illustrate an electric vehicle charging apparatus according to another embodiment of the present invention. The embodiment of figures 12 to 15 differs from the embodiment of figures 1 to 11 only in the mechanism by which the boom arm is able to rotate relative to the structure to which the electric vehicle charging apparatus is mounted. The remainder of the mechanism for deploying and stowing the boom arm may be the same and so is not described again. Only the differences for the embodiment of figures 12 to 15 are described.

Turning to figure 12, this is a side view of the electric vehicle charging apparatus of figures 12 to 15. Boom arm 4 extends from column 2 in the deployed state, with electrical cable 10 connecting the charging connector 6 to the distal end of the boom arm 4. For the embodiment of figures 1 to 11, as illustrated in figure 7, for example, the boom arm 4 is coupled to the column 2 via a pivot assembly 18 and guide flare plates 16 which together allow the boom arm 4 to rotate about the longitudinal axis of the column 2, in the plane of the boom arm 4 in the deployed state. However, in the embodiment of figures 12 to 15 the pivot assembly 18 is omitted and the boom arm 4 is not able to rotate relative to the column 2 in the plane of the boom arm 4. Instead, to enable the boom arm to rotate such that the charging connector 6 is delivered to an appropriate position for coupling to an electric vehicle, the column 2 is pivotally coupled to a pair of mounting elements 70, 72 such that the boom arm 4 rotates together with the column 2 in the plane of the boom arm 4 in the deployed state.

Mounting elements 70, 72 comprise a wall bracket 70 and a floor mounting plate 72. The wall bracket 70 is positioned towards a top part of the column 2 and arranged to be affixed to a wall or other generally vertical supporting structure. The floor mounting plate 72 is positioned at the bottom of the column and arranged to be affixed to a floor surface. Each mounting element 70, 72 incorporates a pivot mechanism or a separate pivot mechanism is provided coupling the mounting element to the column 2 such that the column 2 (and hence the boom arm 4) can rotate about an axis passing through the pivot mechanisms and extending generally parallel to the longitudinal axis of the column 2.

It will be immediately obvious to the skilled person that the number and disposition of the mounting elements may vary. For instance, their position along the length of the column 2 may vary. Both may be wall mounted. There may only be a single mounting element which may be wall or floor mounted (for the latter option, the axis of rotation may fall within the column). The nature of the pivot mechanism may be of any suitable type known to the skilled person, including but not limited to the sprung dogs pivot mechanism illustrated in figure 9.

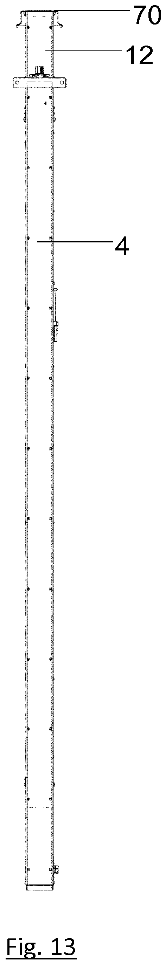

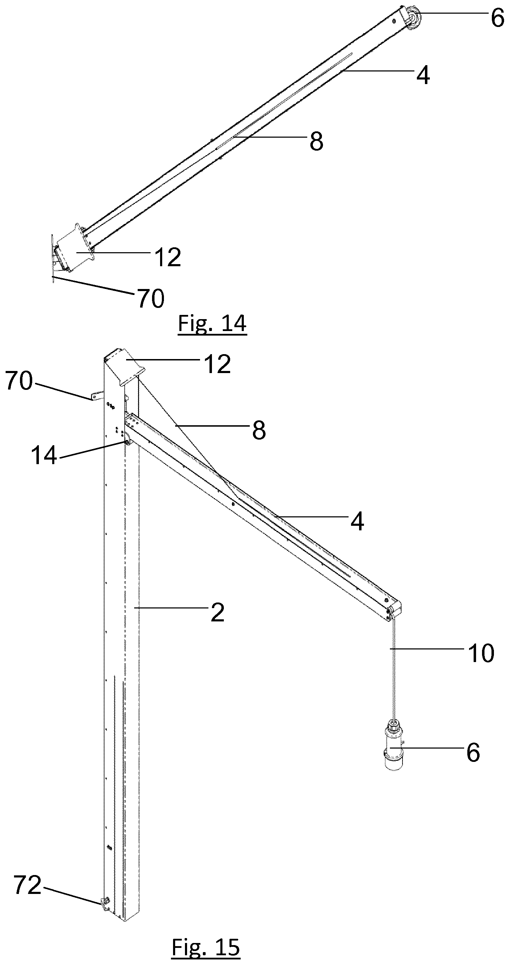

Figure 13 illustrates the electric vehicle charging apparatus of figure 12 in a plan view in which wall bracket 70 is visible. Figure 14 illustrates movement of the column 2 and boom arm 4 relative to the wall bracket 70. Figure 15 presents an isometric view of the electric vehicle charging apparatus of figures 12 to 14.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. An electric vehicle charging apparatus comprising:
a column (2);
a boom arm (4) coupled to the column (2);
a charging connector (6) configured to electrically couple to an electric vehicle (1); and
an electrical cable (10) configured to electrically connect the charging connector (6) to a power supply via the boom arm (4) and the column (2);
wherein, in a stowed state, the boom arm (4) is received within the column (2);
wherein, in a deployed state, the boom arm (4) extends transverse to the column (2) and the charging connector (6) extends from part of the boom arm (4) distal to the column (2);
wherein the boom arm (4) is configured to travel along the column (2) before rotating relative to the column (2) in order to move from the stowed state to the deployed state;
**characterised in that** in the deployed state the charging connector (6) is suspended from the boom arm (4) by the electrical cable (10), and tension applied to the charging connector (6) draws further electrical cable (10) from the boom arm (4); and
wherein, in the stowed state, the electrical cable (10) is retracted into the boom arm (4).

2. The electric vehicle charging apparatus of claim 1, wherein, in the stowed state, the charging connector (6) is received within the column (2).

3. The electric vehicle charging apparatus of claim 1 or claim 2, wherein, in the stowed state, the column (2) is enclosed with the boom arm (4) inside the column (2); and
wherein the column (2) comprises an opening through which the boom arm (4) passes when moving between the stowed state and the deployed state.

4. The electric vehicle charging apparatus of any one of the preceding claims, wherein the column (2) further comprises a roller (14) to guide rotation of the boom arm (4) when deploying or stowing the boom arm (4), and to support the boom arm (4) in the deployed state.

5. The electric vehicle charging apparatus of any one of the preceding claims, further comprising a carriage (40) within the column (2) and pivotably coupled to the boom arm (4), the carriage (40) being configured to be driven along the column (2) such that movement of the carriage (40) deploys or stows the boom arm (4).

6. The electric vehicle charging apparatus of claim 5, further comprising a drive mechanism configured to drive the carriage (40) along the column (2) to deploy or stow the boom arm (4).

7. The electric vehicle charging apparatus of any of the preceding claims, wherein, in the deployed state, the boom arm (4) extends transverse to the column (2) from a section of the column (2) distal to a ground plane.

8. The electric vehicle charging apparatus of any of the preceding claims, wherein the boom arm (4) incorporates a hinge permitting the boom arm (4) to rotate about the column (2).

9. The electric vehicle charging apparatus of any of the preceding claims, further comprising at least one mounting element (70, 72) for attaching the electric vehicle charging apparatus to a supporting structure, wherein the column (2) is pivotally coupled to the at least one mounting element (70, 72) to permit the boom arm (4) and the column (2) to rotate relative to the mounting element (70, 72).

10. The electric vehicle charging apparatus of any of the preceding claims, wherein the boom arm (4) is arranged to telescope to move the charging connector (6) towards or away from the column (2) in the deployed state.

## Patentansprüche

1. Ladevorrichtung für ein Elektrofahrzeug, umfassend:
eine Säule (2);
einen Auslegerarm (4), der mit der Säule (2) verbunden ist;
einen Ladeanschluss (6), der konfiguriert ist, um sich elektrisch mit einem Elektrofahrzeug (1) zu verbinden; und
ein elektrisches Kabel (10), das konfiguriert ist, um den Ladeanschluss (6) über den Auslegerarm (4) und die Säule (2) elektrisch mit einer Stromversorgung zu verbinden;
wobei der Auslegerarm (4) in einem verstauten Zustand innerhalb der Säule (2) aufgenommen wird;
wobei sich der Auslegerarm (4) in einem ausgefahrenen Zustand quer zu der Säule (2) ausdehnt und der Ladeanschluss (6) sich von einem Teil des Auslegerarms (4) distal zu der Säule (2) erstreckt;
wobei der Auslegerarm (4) konfiguriert ist, um sich entlang der Säule (2) zu bewegen, bevor er sich relativ zu der Säule (2) dreht, um sich von dem verstauten Zustand in den ausgefahrenen Zustand zu bewegen;
**dadurch gekennzeichnet, dass** in dem ausgefahrenen Zustand der Ladeanschluss (6) an dem Auslegerarm (4) durch das elektrische Kabel (10) aufgehängt ist, und auf den Ladeanschluss (6) ausgeübter Zug ein weiteres elektrisches Kabel (10) von dem Auslegerarm (4) zieht; und
wobei im verstauten Zustand das elektrische Kabel (10) in den Auslegerarm (4) zurückgezogen wird.

2. Ladevorrichtung für ein Elektrofahrzeug nach Anspruch 1, wobei im verstauten Zustand der Ladeanschluss (6) in der Säule (2) aufgenommen wird.

3. Ladevorrichtung für ein Elektrofahrzeug nach Anspruch 1 oder Anspruch 2, wobei die Säule (2) im verstauten Zustand mit dem Auslegerarm (4) innerhalb der Säule (2) eingeschlossen wird; und
wobei die Säule (2) eine Öffnung aufweist, durch die der Auslegerarm (4) bei der Bewegung zwischen dem verstauten Zustand und dem ausgefahrenen Zustand hindurchgeht.

4. Ladevorrichtung für ein Elektrofahrzeug nach einem der vorhergehenden Ansprüche, wobei die Säule (2) ferner eine Rolle (14) umfasst, um eine Drehung des Auslegerarms (4) beim Ausfahren oder Verstauen des Auslegerarms (4) zu führen und den Auslegerarm (4) im ausgefahrenen Zustand zu stützen.

5. Ladevorrichtung für ein Elektrofahrzeug nach einem der vorhergehenden Ansprüche, die ferner einen Schlitten (40) innerhalb der Säule (2) umfasst, der schwenkbar mit dem Auslegerarm (4) gekoppelt ist, wobei der Schlitten (40) konfiguriert ist, um derart entlang der Säule (2) angetrieben zu werden, dass eine Bewegung des Schlittens (40) den Auslegerarm (4) ausfährt oder verstaut.

6. Ladevorrichtung für ein Elektrofahrzeug nach Anspruch 5, die ferner einen Antriebsmechanismus umfasst, der konfiguriert ist, um den Schlitten (40) entlang der Säule (2) anzutreiben, um den Auslegerarm (4) auszufahren oder zu verstauen.

7. Ladevorrichtung für ein Elektrofahrzeug nach einem der vorhergehenden Ansprüche, wobei sich der Auslegerarm (4) im ausgefahrenen Zustand quer zur Säule (2) von einem Abschnitt der Säule (2) distal zu einer Bodenebene erstreckt.

8. Ladevorrichtung für ein Elektrofahrzeug nach einem der vorhergehenden Ansprüche, wobei der Auslegerarm (4) ein Scharnier einschließt, das eine Drehung des Auslegerarms (4) um die Säule (2) ermöglicht.

9. Ladevorrichtung für ein Elektrofahrzeug nach einem der vorhergehenden Ansprüche, die ferner mindestens ein Befestigungselement (70, 72) zum Anbringen der Ladevorrichtung für ein Elektrofahrzeug an einer Tragstruktur umfasst, wobei die Säule (2) schwenkbar mit dem mindestens einen Befestigungselement (70, 72) verbunden ist, um dem Auslegerarm (4) und der Säule (2) zu erlauben, sich relativ zu dem Befestigungselement (70, 72) zu drehen.

10. Ladevorrichtung für ein Elektrofahrzeug nach einem der vorhergehenden Ansprüche, wobei der Auslegerarm (4) angeordnet ist, um sich zusammenzuschieben, um den Ladeanschluss (6) im ausgefahrenen Zustand zur Säule (2) hin oder von ihr weg zu bewegen.

## Revendications

1. Appareil de recharge de véhicule électrique comprenant :
une colonne (2) ;
un bras de flèche (4) couplé à la colonne (2) ;
un connecteur de charge (6) configuré pour se coupler électriquement à un véhicule électrique (1) ; et
un câble électrique (10) configuré pour connecter électriquement le connecteur de charge (6) à une alimentation électrique via le bras de flèche (4) et la colonne (2) ;
dans lequel, dans un état replié, le bras de flèche (4) est reçu à l'intérieur de la colonne (2) ;
dans lequel, dans un état déployé, le bras de flèche (4) s'étend transversalement à la colonne (2) et le connecteur de charge (6) s'étend depuis une partie du bras de flèche (4) distale par rapport à la colonne (2) ;
dans lequel le bras de flèche (4) est configuré pour se déplacer le long de la colonne (2) avant de pivoter par rapport à la colonne (2) afin de passer de l'état replié à l'état déployé ;
**caractérisé en ce que** dans l'état déployé, le connecteur de charge (6) est suspendu au bras de flèche (4) par le câble électrique (10), et une tension appliquée au connecteur de charge (6) tire davantage le câble électrique (10) depuis le bras de flèche (4) ; et
dans lequel, dans l'état replié, le câble électrique (10) est rétracté dans le bras de flèche (4).

2. Appareil de recharge de véhicule électrique selon la revendication 1, dans lequel, dans l'état replié, le connecteur de charge (6) est reçu à l'intérieur de la colonne (2).

3. Appareil de recharge de véhicule électrique selon la revendication 1 ou la revendication 2, dans lequel, dans l'état replié, la colonne (2) est enfermée avec le bras de flèche (4) à l'intérieur de la colonne (2) ; et
dans lequel la colonne (2) comprend une ouverture à travers laquelle passe le bras de flèche (4) lorsqu'il bascule entre l'état replié et l'état déployé.

4. Appareil de recharge de véhicule électrique selon l'une quelconque des revendications précédentes, dans lequel la colonne (2) comprend en outre un rouleau (14) pour guider la rotation du bras de flèche (4) lors du déploiement ou du repliage du bras de flèche (4), et pour supporter le bras de flèche (4) dans l'état déployé.

5. Appareil de recharge de véhicule électrique selon l'une quelconque des revendications précédentes, comprenant en outre un chariot (40) à l'intérieur de la colonne (2) et couplé de manière pivotante au bras de flèche (4), le chariot (40) étant configuré pour être entraîné le long de la colonne (2) de telle sorte que le mouvement du chariot (40) déploie ou replie le bras de flèche (4).

6. Appareil de recharge de véhicule électrique selon la revendication 5, comprenant en outre un mécanisme d'entraînement configuré pour entraîner le chariot (40) le long de la colonne (2) pour déployer ou replier le bras de flèche (4).

7. Appareil de recharge de véhicule électrique selon l'une quelconque des revendications précédentes, dans lequel, dans l'état déployé, le bras de flèche (4) s'étend transversalement à la colonne (2) à partir d'une section de la colonne (2) distale par rapport à un plan de masse.

8. Appareil de recharge de véhicule électrique selon l'une quelconque des revendications précédentes, dans lequel le bras de flèche (4) incorpore une charnière permettant au bras de flèche (4) de tourner autour de la colonne (2).

9. Appareil de recharge de véhicule électrique selon l'une quelconque des revendications précédentes, comprenant en outre au moins un élément de montage (70, 72) pour fixer l'appareil de recharge de véhicule électrique à une structure de support, dans lequel la colonne (2) est couplée de manière pivotante à l'au moins un élément de montage (70, 72) pour permettre au bras de flèche (4) et à la colonne (2) de tourner par rapport à l'élément de montage (70, 72).

10. Appareil de recharge de véhicule électrique selon l'une quelconque des revendications précédentes, dans lequel le bras de flèche (4) est agencé pour se télescoper pour déplacer le connecteur de charge (6) vers ou à en éloignement de la colonne (2) dans l'état déployé.
